# EUROPEAN PATENT APPLICATION

(11) **EP 2 485 294 A1**
(43) Date of publication of application: **08.08.2012**
(21) Application number: 09764043.7
(22) Date of filing: 08.10.2009
(51) Int. Cl.: H01M 2/16, H01M 10/04, H01M 10/36, H01M 10/38, H01M 4/04, H01M 8/02

(54) **ENERGY GENERATION AND/OR STORAGE DEVICE BASED ON FIBRES AND THIN FILMS**

(30) Priority: 29.09.2009 PT 10476609
(71) Applicant: Faculdade De Ciências E Tecnologia Da Universidade, 2829-516 Caparica (PT)
(72) Inventor: DE PAIVA MARTINS, Rodrigo Ferrão, P-2820-292 Charneca da Caparica (PT); CORREIA FORTUNATO, Elvira Maria, P-2820-292 Charneca da Caparica (PT); MERCÊS FERREIRA, Isabel Maria, P-2825-716 Monte da Caparica (PT); MIRANDA RIBEIRO BORGES, João Paulo, P-2910-706 Setúbal (PT); BERNARDINO BAPTISTA, Ana Catarina, P-2625-173 Póvoa de Santa Iria (PT); DE ALBUQUERQUE BRÁS, Bruno André, P-7540-209 Santiago do Cacém (PT)
(74) Representative: Ferreira, Maria Silvina
(86) International application number: PCT/IB2009/054423
(87) International publication number: WO 2011/039576

(57) **Abstract**

The present invention relates to small or large flexible devices for energy generation, storage, or both that generate power ranging from microwatts up to dozens of Watts.

The device is manufactured on substrates of cellulose or its derivatives acting as support and active element of the device.

This invention reports on the development of a single structure comprised by a substrate that works also as separator and electrolyte (1), anode (2), and cathode (3). The substrate is comprised by a matrix of natural, synthetic, or mixed cellulosic fibres that are processed by different techniques. The simple or additivated cellulose-based fibres allow the ionic exchange between anode and cathode, acting as electrolyte, and work simultaneously as physical support for the device.

In the present invention, the fibre matrix is coated on both side-faces, making use of thin film deposition techniques, with materials that act as anode or cathode according to the oxidation or reduction potentials of the used materials, including one or several layers of metal materials, metal oxides, or semiconductors.

The amount of energy supplied by the device depends on the type of fibres, on the anode and cathode materials, and also on the type of electrolytic solution, when used.

## Description

### Field of the invention

The present invention belongs to the field of flexible devices with energy generation and/or storage capacity, comprised by a matrix of natural, synthetic, or mixed cellulose-based fibres, and forming a membrane that is coated on both side-faces with thin films that form an anode and a cathode. The fibre matrix, which forms a porous membrane, besides acting as a support for the device also works as an ion-permeable medium where the electrochemical reactions responsible for the generation of electric charges occur. In the presence of an electrolytic solution there is electric energy generation due to redox reactions that occur between the membrane constituents and the electrolytic solution. The energy supplied by the device depends on the type and amount of electrolytic solution used, depends on the matrix constituents, on the materials used for the electrodes, and depends on the number of cells connected in series or in parallel.

### Background of the invention

The current development of the portable electronics industry exerts a huge pressure on energy storage/generation devices, which in the recent past were even considered unable to follow the almost exponential technological growth of the remaining industries [1].

One of the major drawbacks of portable electronics is the need to include the power supply - usually batteries - in the device itself. Since those batteries must have sufficient capacity to fulfil the energy requirements of the device, they might become too bulky or heavy when compared to the remaining electronic structure. Fortunately, the tendency to device's miniaturization is inherently coupled to the decrease of the power requirements. That allows their operation by means of power supplies that hitherto were unable to power portable devices, namely the *thin film batteries*.

In this sense, the microelectronics field has been increasingly used in the manufacture of thin film batteries, making their miniaturization possible, and consequently optimizing the space and/or mass occupied by the electronic device. In addition, in case the batteries are totally conceived making use of microelectronics techniques, they are amenable to direct integration into the electronic devices, rendering them self-powered in voltage modules that are multiple of 1.5 Volts and current densities that can range between 0.1 µAcm⁻² and 1 Acm⁻².

There are several works in the literature that report the use of cellulose and derivatives thereof as separators in batteries. These devices generally require the use of electrolytic solutions for their operation. Examples of such solutions are potassium hydroxide, sodium chloride, or zinc chloride solutions, according to the device electrodes.

On the contrary, in the present invention the device comprised by additivated membranes can operate even without including any type of solution. In this case, the used substrate (additivated matrix, namely paper) incorporates in its structure the ions required to the solid state device operation.

Currently, the thin and flexible battery SoftBattery® is marketed by Enfucell. This company holds the patent application WO 2008/096033 A1, wherein the battery composition and manufacture methods are presented [4]. The developed battery uses paper as separator between the electrodes. In the preferred embodiment of this battery, the electrolyte is inserted together with the electrodes, a past, during the manufacture process. The electrode paste is formed by active materials, by the electrolytic solution, and also by conductive materials, such as, for example, carbon powder.

In the battery proposed by the present invention, the paper is used not only as separator but also as electrolyte, not being required any additivation during or after the device's manufacture process. It should be noticed that the electrodes are differently formed, using preferably physical, physical-chemical, or chemical deposition techniques (such as Resistive Thermal Evaporation or Sputtering), which allows the device direct integration into solid state electronic circuits.

In the patent US 2009/0081544 Al, by the same author, the benefits of adding carbon nanotubes to the electrode paste become notorious, as well as the use of a thick layer of separators (two or three paper layers) that minimizes the risk of short-circuits between the electrodes [5]. This concept, however, has no bearing on the present invention.

Another method for the manufacture of a flexible thin film battery is revealed in the United States patent US 6,379,835 Bl (2002). The battery is comprised by porous electrodes, a separator/electrolyte layer, and also by anode and cathode current collectors [6]. Preferably, all these layers are applied by ink printing onto a substrate that can be a polymeric film (e.g. polyethylene, polyester, polypropylene), or even paper. The battery is activated by contact with an aqueous solution and generally presents an operating lifetime of 48 hours.

In this example, the paper is used as a flexible substrate/support onto which the several active layers of the battery are printed. In this example, the paper is not an active element in the sense that it does not work as electrolyte, contrary to the invention proposed herein.

In 2006, the author Ki Banc Lee presented a study addressing paper batteries for powering a plastic substrate-incorporated biosensor [7]. The proposed battery is comprised by a Magnesium layer (anode), absorbent paper (fluid guide), and a highly Copper Chloride-doped filter paper (cathode). The batteries, wherein the electrodes are deposited onto a copper substrate by means of lamination, are activated by a two-step process: first, the insertion of a drop of liquid (urine, saliva, or even tap water) into the electrochemical cell soaks the absorbent paper. Thereafter, the penetration of the fluid into the cathode starts the electrochemical reaction. In the same work, Lee still demonstrated the possibility of integrating two batteries connected in series to power two LEDs.

In the present invention, a paper membrane (for example, a paper sheet) is coated with thin films that form the anode and the cathode, which can even be transparent, allowing the direct powering of paper transparent electronic circuits without an electrolytic solution addition.

it dates from 2007 a publication by Pushparaj et al. about flexible paper batteries for energy storage [8] . In the reported study, aligned carbon nanotubes were produced onto which RTIL (Room-Temperature Ionic Liquid) dissolved cellulose was poured, thereby forming a nanocomposite. The resulting structure presents cellulose (separator) embedded with aligned carbon nanotubes (cathode). As an alternative to RTIL, this paper reports on the use of bodily fluids acting as bioelectrolytes for implantable medical devices applications.

The distinct types of structures and involved materials make evident the differences between the latter example and the present invention.

A field somewhat more scattered but also extremely interesting from the technological point of view addresses hybrid electrochemical cells. The use of paper as separator is also currently viable in the latter.

The patent WO 2007/147942 Al (2007) reports on a layered structure that consists in a cathode current collector onto which a cathode) paste is printed [9]. A separator layer (for example, a filter paper) is disposed on the latter. The cell is concluded by printing or coating the anode paste and current collector. This cell is quite similar to the traditional fuel cells, thereby requiring a fuel (environmental oxygen) flow for its operation. The anode active element is a metallic one (e.g., Zinc), while the cathode presents in its composition a catalytic enzyme. In this example, all layers are applied by means of paste coating techniques cr by means of printing (e.g. *screen printing) .* This example is also completely different from the present invention.

For a better contextualization of this invention it should finally be mentioned that, due to the current significance of thin film batteries at the research and development levels, there are innumerable studies concerning materials intended for electrodes. In this sense, cathodes such as CuWO₄ [10] , V₂O₅ [11], or binary alloys of Sn-Cu [12] have good chances of being applicable to batteries. Also varied anodes are studied in the literature, like fullerene (C₆₀)-coated silicon films [13].

In the present invention there are numerous possibilities of matching the materials that constitute the electrodes, thereby demonstrating a large versatility and adaptability to different applications.

According to what was previously presented, it is obvious the recent focus on cellulose-based structures for energy storage. The properties resulting from the use of this type of substrate become appealing in what concerns the device flexibility and low density (weight). In this sense, on one of the aspects of the present invention the developed device can be directly integrated into flexible and disposable electronic circuits. This embodiment is innovative for being entirely a solid state device, making use of thin film depositions that act as anode and cathode. The fact that the device can operate with or without including an electrolytic solution broadens the application field and its autonomy.

The distinctive feature of the present invention is the easy production of the device, being merely a membrane comprised by cellulosic fibres, or derivatives thereof, with or without additives, and two thin film electrodes. The term additives should be understood as compounds that impart an ionic character to the matrix, such as, for example, sodium, chlorine, lithium ions, among others. Another distinctive feature is the usage versatility. The same type of device can be used with or without adding an electrolytic solution. In the absence of electrolytic solution, the device behaves as a battery. If a compatible electrolytic solution that does not dissolve the membrane or attack the electrodes, for example, an aqueous ethanol solution, is added, it behaves like a fuel cell. The device's versatile character, and the fact that it is very flexible provides a huge applicability, from disposable and low power electronics to :biomedical and biological applications. The device's flexibility is also due to its total thickness smaller than 1 mm.

One of the aspects of the present invention is the use of a non-additivated fibres matrix, which allows the production of a device that only operates in the presence of electrolytic solutions. These solutions should be based on ionic solutions, water, alcohols, biofluids, or gases. Another aspect of the present invention is the use of additivated substrates, which enables conceiving a battery that generates electrical energy ever- without introducing electrolytic solutions. Examples of additivated substrates are natural, synthetic, or mixed paper that allow the device direct integration into paper electronics *(paper-e*) systems, rendering them *self-powered.*

The versatility of this invention turns its application field quite vast,, namely in flexible and disposable electronics, allowing its integration into self-sustaining electronic devices. Presently, this potential becomes even more relevant from the technological point of view, after the recent discovery of paper transistors ([2] and [3]) since the circuits formed by these elements urgently require a self-sustaining power supply that can be an integral part of the device.

Unlike the batteries already mentioned, in the present invention the use of a substrate comprised by a matrix of non-additivated fibres allows conceiving a device that depends on and is limited by the inclusion of a fuel - fuel cell.

Fuel cells are power supply systems capable of operating independently for long time periods, and not requiring a stop for recharging as long as there is fuel [14] . The device thereby embraces other areas cf potential application, such as, in implantable medical devices using biofluics for powering the fuel cell, or in smart cards for the agro-food industry where food juices can be used as fuel, among other applications [8].

Although the present invention belongs to the same application field, it corresponds to a distinct innovative solution wherein a matrix of polymeric nanofibres of natural, synthetic, or mixed origin is used that acts simultaneously as separator and electrolyte (in the sense that it is an ionic conductor), requiring merely the presence of an ion donor solution.

Membranes made of electrospun fibres, due to its high porosity and large surface area, have recently been studied for applications in batteries and fuel cells [15]. Since the velocity of electrochemical reactions is proportional to the electrode surface area, membranes comprised by conductive nanofibres become potential targets for manufacturing porous electrodes intended for the development of these devices [16]. US2007/0042262A1 (2007) reports the development of an electrode for a fuel cell. This electrode comprises carbon nanotubes that are formed from a support made of electrospun nanofibres, and are coated with a catalytic material. The surface area increases due to its nanoscale cylindrical geometry, leading to a higher catalytic activity. This electrode can be used as cathode and/or anode, making use of a polymeric membrane that acts as electrolyte (for example, NAFION 112) [17]. The present invention is different from the previously presented example in that the membrane formed by the nanofibre matrix acts simultaneously as separator and electrolyte, thereby forming a cell that is activated by the introduction of an electrolytic solution. The electrodes are deposited on both side-faces of the membrane in the form of thin films .

Recently, the patent US2009/0026662A1 (2009) presents the development of an electrolyte with a matrix of hybrid polymer nanofibres (with two or more polymers) obtained by electrospinning for lithium secondary batteries applications. In this example, a polymer (ionic conductor with plasticizing properties) and the lithium salts are dissolved in organic solutions. The formed organic electrolytic solution is then incorporated into an electrospun polymeric matrix. Finally, the electrodes (metal plates) are inserted by means of processes such as lamination [18].

The present invention is clearly distinct from the previously mentioned example. In this work, a membrane formed by an electrospun single polymer solution is used for producing the electrolyte that acts simultaneously as separator and physical support. The electrodes are directly deposited onto the opposite side-faces of the membrane in the form of thin films making use of physical and/or chemical evaporation techniques. This device is activated only in the presence of a biofluid working as electrolytic solution (saline aqueous solutions), and is intended for a biotechnological application in fuel cells.

Recently, the patent US2009/0026662A1 (2009) presents the development of an electrolyte with a matrix of electrospun polymeric nanofibres (with two or more polymers) for application in lithium secondary batteries. The high porosity of this matrix allows incorporating the lithium ions by means of a dipping technique, and also makes the adhesion thereof to the electrode easier [18].

The present invention is different from the latter example in that the separator/electrolyte is activated in the presence of an electrolytic solution, biofluid, intended for application in fuel cells.

The object of the present invention is to develop a flexible electrochemical device that integrates the anode, the separator/electrolyte, and the cathode in the same structure.

For that purpose different types of membranes are used, comprised by a matrix of cellulosic fibres that are either natural or processed by means of different techniques (namely electrospinning). The simple or additivated cellulose-based fibres allow the ionic exchange between the anode and cathode to occur, acting as an electrolyte, and working simultaneously as the physical support for the device, imparting to it a membrane thickness-dependent flexibility and a mechanical robustness that depends on the fibre type that is used. The device is still characterized by possessing high application versatility, since the same device can operate in the open air or in the presence of a compatible electrolytic solution.

### General description of the invention

One of the aspects of the present invention refers to the development of a solid state flexible energy generation and/or storage device based on the use of a matrix of natural, synthetic, cr mixed cellulosic fibres, and on thin films, including the manufacture processes and methods, as well as its usage in flexible electronic systems.

In this invention the substrate is also an active element of the device since it acts as separator and as electrolyte.

The device is comprised by a fibre matrix that forms a porous membrane with high surface area. The membrane is coated with appropriated thin films to form the anode and cathode. The cellulose-based membranes produced by natural, artificial, or mixed processes, act as the physical support of the device and also as electrolyte and separator. The fibre matrix can be obtained in the form of a paper sheet, woven with natural, cr synthetic, or mixed fibres, by means of the *electrospinning* technique.

The electrodes (anode and cathode) are deposited by means of thin film chemical and physical deposition techniques, such as but not exclusively limited to sputtering, laser-assisted deposition, resistive or electron gun thermal evaporation. These deposition techniques keep the substrate intact, for they do not use .solvents or pastes that can change or damage both the membrane's surface and its inner structure. These techniques simultaneously allow a higher precision in controlling the electrode thickness, a decisive feature to combine flexibility and electrical continuity cf the device's electrodes. The electrodes can be formed by one or several layers of metals or metal alloys, and binary or ternary metal oxides. The device flexibility stems from the type of substrate that is used, for example, paper or membrane made of electrospun cellulose fibres. The thin films produced by means of the above referred deposition techniques coat only the fibres on the membrane surface, thereby allowing a sufficient flexibility for the device to work even in extreme situations (e.g., with creases; without significant power loss.

In one embodiment of the invention, the device contains a membrane based on nano/microfibres of natural, mixed, or synthetic paper, wherein the inclusion of an electrolytic solution is not required for energy generation since the paper is ion-additivated during the manufacture process. Therefore, the reduction/oxidation reactions that occur during operation are sufficient for generating electrical power to supply low power electronic devices. In the case of membranes synthesized by means of electro spinning (non-additivated ones) it is necessary to add ions for achieving the same behaviour, wherein saline solutions with volatile solvents, such as but not exclusively limited to water or ethanol, can be used in this addition by soaking the fibre in these solutions followed by solvent evaporation. The current supplied by the device is strongly determined by the interface area between the membrane and the electrodes as well as by their thicknesses, ranging from 0.1 µA/cm² to 1 A/cm² . On the other hand, the terminal voltage of the battery depends on the used anode and cathode materials, possibly adjusted to multiples of 1.5 V.

In another embodiment cf the invention, the device formed by non-additivated fibres, such as, a matrix made of cellulose-based nano/microfibres produced by electrospinning, depends on the introduction of a fuel to start the device's operation.

In this case, the energy generation depends not only on the materials that form the anode and the cathode but also on the type of electrolytic solution used as fuel, as well as on the concentration and amount thereof.

### Description of the figures

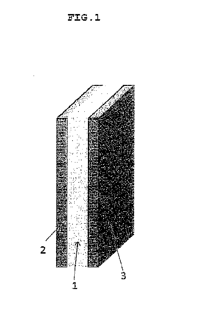

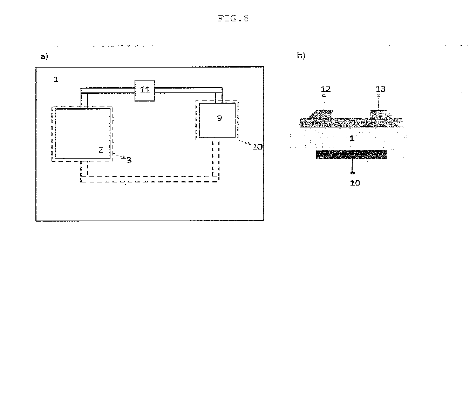

**FIG. 1**: Schematic view of the developed devices comprised by the substrate (membrane made of synthetic or natural fibres) (1), onto which the electrodes are deposited: the anode (2), the cathode (3);

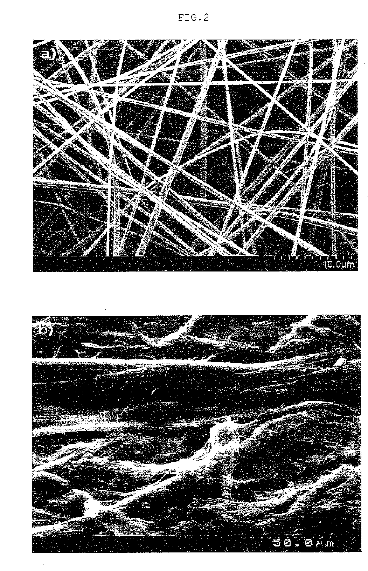

**FIG. 2**: SEM image of a fibre matrix: (2a) non-additivated matrix, nanofibres of cellulose acetate; (2b) additivated matrix, white paper of 80 g/m²;

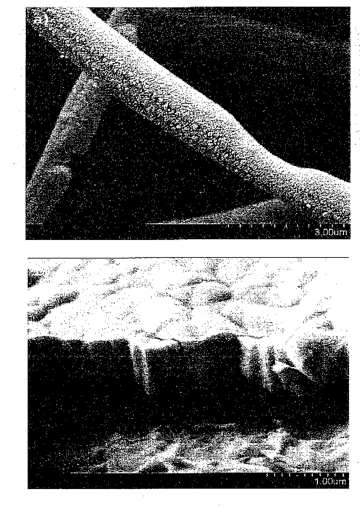

**FIG. 3**: SEM image of the fibres matrix coated with an Aluminium thin film: (3a) non-additivated matrix comprised by electrospun cellulose-based fibres; (3b) additivated matrix (white paper sheet of 80 g/m²);

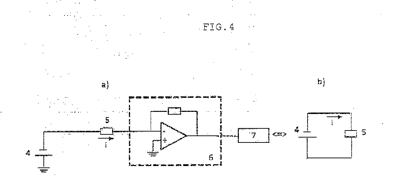

**FIG. 4**: 4a) presents a schematic view of the circuit used in the device (4) discharge study. The device negative terminal was connected to a fixed resistance (5) of known value. The device positive terminal was grounded, wherein the load (5) is connected to the electrometer inverting input (6) . It should be noted that the nor-inverting input is grounded, thereby creating a virtual ground between the battery and the resistance. Therefore, the circuit is ideally equivalent to the one schematically presented in figure 4b). A computer (7) connected to a data acquisition board records the experimental assay.

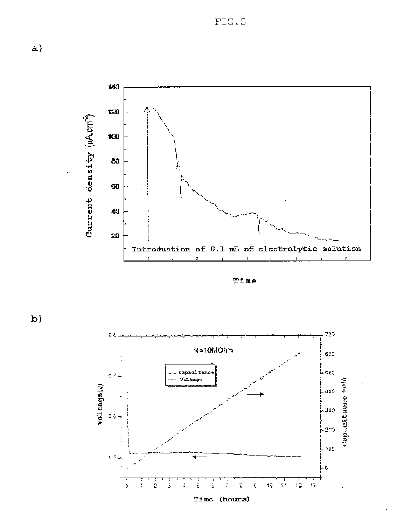

**FIG. 5**: 5a) presents the discharge chart of a device formed by an electrospun cellulose fibre membrane with silver and aluminium electrodes. A fixed resistance of 120 Ω was used for this assay. In the beginning, 0.1 mL of a saline solution were added. 5b) presents the discharge chart of a device formed by a normal writing paper membrane with an aluminium anode and a cathode comprised by overlapped layers of vanadium and tungsten oxides and a transparent and conductive oxide (GZO). The assay was conducted using a fixed resistance of .10 MΩ for 12 hours;

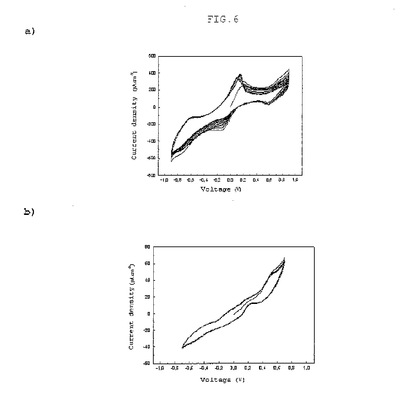

**FIG. 6**: 6a) presents the electrochemical characterization by means cf Cyclic Voltammetry of a device comprised by electrospun cellulose fibre membrane with the potential limits of -1 and 1 V. 15 cycles were run. 6b) presents the electrochemical characterization of a device comprised by white writing paper with the potential limits of -1 and 1 V. 5 cycles were run. In both assays, 0.1 mL of a 0.9% (w/w) aqueous NaCl solution were added, and the membrane electrical connections are made of Au.
**FIG**. **7****_{:}** Different methods for connecting electrochemical elements: 7a) and 7b) parallel connection, 7c) series connection, wherein (1) represents the separator/electrolyte, (2) the anode, (3) the cathode, (8) the current collectors, and n represents a finite number of connected electrochemical cells; **FIG. 8**: Possible application of the electrochemical cells to a microcircuit: 8a) is a schematic view of the circuit and 8b) presents a cross section of the powered microdevice (example: paper transistor). in this figure, (1) represents the separator/electrolyte; (2) and (3) represent the electrodes (anode and cathode, respectively); (12) and (13) represent the source and drain, respectively, of a transistor; (9) represents the semiconductor that forms the transistor channel; (10) represents the transistor gate; (11) represents a microswitch;

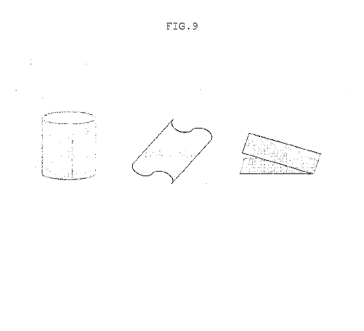

**FIG.9**: In order to demonstrate a device's flexibility, a schematic view is presented. Independently of the geometry presented in the three configurations, the device (with an area of 5 cm²) exhibits an open circuit voltage of 0.93 V.

### Detailed description of the invention

The present invention refers to the design of a flexible, solid state, thin film device capable of generating and/or storing energy, as well as the production processes thereof. The device is produced in a membrane formed by cellulose fibres or its derivatives, wherein the membrane side-faces are coated with thin film mono- or multilayers of metals, or metal alloys, or degenerated semiconductive oxides of binary or ternary alloys (FIG. 1). The fibre matrix is a porous and flexible membrane that acts simultaneously as an active component of the device's operation, since the electrochemical reactions responsible for generating electric charges occur in the membrane, and also works as physical support for the device.

The development of a single structure combining all the components that are essential for an electrochemical device provides it high flexibility, lightness, possibility of miniaturization, and application versatility. Therefore, this invention comes as an answer to needs in the microelectronics' field, being intended for low power electronic devices, namely disposable electronics applications.

The fibres that form the matrix of the porous membrane can be of natural origin, such as silk, cotton, and wool, or of synthetic origin, such as paper (in its various forms), or nanofibres produced by techniques such as electrospinning. This process allows producing fibres with diameters that can range between micrometers and nanometers (FIG. 2a). The major advantage of using fibre matrixes is their high porosity and high surface area. Another advantage is the fact that the electrodes are produced by thin film techniques, which allows the coating of the superficial fibres of the membrane only, thereby preventing the occurrence of short-circuits. The result is a simplified design of the device and a higher intake of generated charges, and thus an improvement on the device performance.

In the case of nanofibres, these can be based on a large variety of polymers, namely: cellulose and its derivatives (such as, hydroxypropylcellulose (HPC), propanoate of HPC, butyrate of HPC, isobutyrate of HPC, pentanoate of HPC, isopentanoate of HPC, t-pentanoate of HPC, hexanoate of HPC, t-hexanoate of HPC, heptanoate of HPC, benzoate of HPC. acetoxypropylcellulose, propionylpropylcellulose, cellulose acetate, methylcellulose, carboxymethylcellulose, among others), as well as chitosan and its water-soluble derivatives (such as, hydroxypropylchitosan and carboxymethylchitosan, among others).

The device preparation process consists in thin film mono- or multilayered depositions of materials adequated for the formation of the device's anode and cathode, onto both side-faces of the membrane (FIG. 3). The mono- or multilayered depositions of the thin film electrodes (anode and cathode) are made by thin film production techniques, and only the outermost matrix fibres are coated in this process.

The deposition of the electrodes in the form of thin films can be made by techniques such as Resistive Thermal Evaporation (as referred in example 2), Sputtering, Electron Gun, Chemical Vapour Deposition assisted by thermal processes or assisted by plasma, among others. The thin films considered herein can be films of conductive metals, such as Au, Ti, Pt, Ag, Cu, Al, Ni, Co, Zn, Sn, W, Fe, Cr, V; or metal alloys formed by the same; can be mental oxides of binary alloys VₓO_{y}, WOₓ, TaO, SiOₓ, TiOₓ, CoOₓ, CuOₓ, FeₓO_{y,} SnₓO_{y}, among others, or ternary alloys of the type TiₓSi_{y}O_{z,} WₓTaO₂, WₓV_{y}O_{z}, among others, wherein x, y, z corresponds to the number of atoms in the allcy, and also semiconductors and alloys thereof. A different type of oxides can also be used, such as transparent and conductive oxides (TCOs) : GZO (ZnO:Ga), IZO (ZnO:In), and AZO (ZnO:Al), for instance. There are many possible combinations. Covalent semiconductors and their alloys can also be used, such as, for example Si and SiC, among others.

In this invention, the anode and cathode can be comprised by monolayers or multilayers, being possible to combine, for example, metal oxides with metals, or metal oxides with TCOs, or TCOs with metals and also semiconductors, in order to adjust the electrical properties according to the intended application. In case the device is to be applied to a transparent electronic circuit, the electrodes must also be transparent, and in that case conductive and transparent oxides should be used as electrodes, In case one wishes to produce a device with higher charge storage capacity, metal oxides should be included in one of the electrodes.

There is also the possibility of depositing one or more ion donor layers (for example, lithium, sodium, or potassium ions) between the substrate and the electrode, such as LiAlF₄, LiClF₄ LiOH, LiPO₄, among others. The deposition of these layers is made by means of thin film production techniques, such as Resistive Thermal Evaporation (as referred in example 2), sputtering, Electron Gun, Chemical Vapour Deposition assisted by thermal processes or assisted by plasma, among others. Alternatively, the membrane can be embedded with an ionic solution, for example, with LiAlF₄, LiClF4, LiOH, LiPO₄or NaCl solutions, among other compounds, in an aqueous or non-aqueous volatile solvent, such as ethanol, propanol, and acetone, among others. During the solvent's evaporation, the ionic species remain in the membrane, thus optimizing the performance of the device.

In one embodiment of the invention, the device membrane is made of paper (in its various forms) or its derivatives. This type of porous membrane formed by nano/microfibres incorporates in its structure compounds that are added during the fabrication process. That imparts an ionic character to the matrix due to the presence of sodium, chlorine, and lithium ions, among others. The presence of these additives promotes the charge transport and transfer during the electrochemical process, thereby improving the performance of the device. The device generates energy even without introducing a fuel (electrolytic solution), and the majority of different types of marketed paper can be used, for instance, printing and writing papers, tracing-paper, technical papers, and household papers, among others. The current supplied by the device depends on the interface area between the membrane and the electrodes, ranging from 0.1 µA/cm² to 1 A/cm². The voltage of the battery depends on the anode and cathode materials used, being possibly adjusted to multiples of 1.5 V or other voltage values according to the requirements of the device that is being powered.

The paper membrane device produced by means of compatible techniques as the ones mentioned above is specially intended for flexible electronic circuits made of paper, and yet it should be noticed that the device's applicability is significantly more vast and is not limited to the above mentioned paper circuits.

The membrane of this device is not limited to paper, and nanofibres produced by means of techniques such as electrospinning, or natural fibres (both as defined above) can also be used. In this case; it is necessary to incorporate ions into the membranes. The ions can be added to the fibre matrix, for example, by embedding the fibres with aqueous saline or organic (e.g. ethanol) solutions, and thereafter evaporating the solvent. This step can be conducted before or after the deposition of the thin films onto the membrane, being preferably done after the thin film electrodes are deposited onto the side-faces of the membrane.

In another embodiment of the present invention, the device car be activated by introducing a fuel (electrolytic solution) that triggers energy generation. When the electrolytic solution is added, the reactions that occur within the membrane result in the production of electric charges. These can be conducted and displaced throughout the membrane of cellulose-based fibres by means of the potential difference between the electrodes, with the purpose of powering electronic devices.

In this case, the energy generation depends not only on the materials that form the anode and the cathode but also on the type of electrolytic solution used as fuel, as well as on its the concentration and amount.

According to the application intended for this type of device, the polymer and electrolytic solution to be used should be taken into account. For example, for biomedical applications it can be used biofluids, such as blood and perspiration, choosing a biocompatible polymer. The device can be used in implantable biomedical devices for cowering low power electronic microdevices. Some examples can be mentioned, such as .powering low power pacemakers, imaging capsules, adhesive-type devices for the recovery of bodily fluids and respective conversion into electrical power, among others.

For general electronics applications, any type of ionic solutions (such as lithium ion-based solutions or other saline solutions), water, and alcohols can be used as electrolytic solutions.

The device comprised by a paper membrane can also generate energy in the presence of an electrolytic or fuel solution, wherein the solution should preferably be device-compatible. This means that it should neither dissolve the paper nor attack the electrode materials, in order to increase the operating lifetime of the device.

In the scope of the present invention, a fuel solution or electrolytic solution is understood as being any solution cr liquid that contains ions or is able to produce ions within the membrane, including solvents such as water (either deionised or not); alcohols; saline solutions; saccharin solutions; biofluids such as urine, blood, and perspiration, among others that fulfil this requirement. According to the concentration, type, and amount of fuel used, this will provide more or less reagent for supplying the reactions that take place within the fibres, and thus change the energy supplied by the device.

Since the morphology of any of the previously mentioned membranes is irregular and porous, as clearly seen in FIG. 2, film adhesion becomes easier and the contact area between the electrodes and the fibres chat constitute the membrane is maximized. The electrochemical behaviour of the device is consequently optimized, since the device current is determined by the interface area between the electrolyte and the electrodes. The membrane porosity is also a significant factor in the ionic charge mobility.

The materials used as electrodes (anode and cathode) play an important role in the open circuit voltage values of the device and also in its performance. These can work just as charge collector electrodes (metals are an example of this function), as ion donors and/or storage elements (examples are metal oxides), or still act as electron donors (examples are semiconductors).

FIG. 1 presents a schematic view of the proposed devices, wherein the electrodes anode (2) and cathode (3) are deposited onto the opposite side-facas of the membrane formed by a matrix of cellulose-based fibres.

According to what was previously presented, the devices thus designed are flexible and versatile regarding the application, and the occupied volume (and mass) can be minimized. Additionally, the required amount of material for producing the thin films is reduced, thereby providing a large scale low cost process.

The power of the device depends on the area and on the type of connection (series or parallel connection), and also on the type of matrix that is used (for example, the type of paper that is used: transparent drawing paper, printing or recycled paper, tracing-paper, among others), and these factors can be combined by the skilled in the art to prepare a device adequate for the intended application.

### Examples

The following examples illustrate the present invention in detail, but should not limit the scope of the invention.

### Example 1

### 1.1 Production of a matrix of polymeric nanofibres using the electrospinning technique

A cellulose acetate solution [15 - 21% (w/w) ] in acetone/ethanol (ethanol 0 30%) was inserted into a syringe and placed in the electrospinning assembly. Thereafter a voltage of 5 - 30 kV was applied between the needle tip and the rotary collector, which are 10 - 25 cm apart. The applies flow car range between 0.1 and 1.5 mL/h, and the deposition time used depends on the required membrane thickness. The fibres thus produced have between 50 nm and 2 um in diameter.

### 1.2 Thin film deposition by the resistive thermal evaporation technique

The substrate holder is loaded with the samples (fibre matrix). Thereafter, the crucible containing the material to be evaporated is placed inside the deposition chamber. A thin film should be deposited with the best possible vacuum, being advisable to achieve pressures in the order of 10⁻⁶ mbar. For this example, a silver wire is evaporated using a tungsten crucible in which is applied a current of 150 - 220 A for 1 to 10 minutes. The achieved thickness ranges between 500 Å and 5 µm. The procedure is then repeated on the opposite side-face of the separator/electrolyte for depositing a thin aluminium film.

### Example 2

### 2.1 Production of a matrix of polymeric nanofibres using the electrospinning technique

The matrix was produced as described in 1.1 of example 1.

### 2.2 Thin film deposition by the sputtering technique

The thin films were deposited onto one side-faca of the membrane using the sputtering technique. The target to be deposited and the substrate under study are placed inside the vacuum chamber separated by a distance of 5 - 15 cm. An electric signal capable of ionizing an argon and oxygen gas flow is applied. The physical principle underlying this process is the ionized (high energy) particle bombardment of the target, thereby releasing the surface material that is then deposited onto the substrate. In this example, a GZO (gallium-doped zinc oxide) target was used, and a thickness ranging between 500 Å and 5 µm was achieved. Subsequently, a metal thin film, such as aluminium, is deposited onto the opposite side-face of the separator/electrolyte by means of the resistive thermal evaporation technique. One or more intermediate oxide layers, for example, tungsten and vanadium oxides, could be deposited between the separator/electrolyte and the previously described materials - multilayered electrodes.

### Example 3 - Thin film deposition by the resistive thermal evaporation technique

The substrate holder is loaded with the membrane, in this example a white printing paper with a surface area of 5 cm². The procedure is conducted according to what was described in 1.2 of example 1. In this example, a copper wire is evaporated using a tungsten crucible in which a current of 130 - 210 A is applied for 30 seconds to 5 minutes. The obtained thickness ranges between 100 Å and 5 µm. Subsequently, the procedure is repeated on the opposite side-face of the paper separator/electrolyte for depositing an aluminium thin film.

### Example 4 - Thin film deposition by the sputtering technique

The substrate holder is loaded with tracing-paper with a surface area of 5 cm². The procedure is conducted according to what was described in 2.2 of example 2. In this example a GZO (gallium-doped zinc oxide) target was used, and a thickness ranging between 500 Å and 5 µm was achieved. Subsequently, a metal thin film, such as, aluminium, is deposited onto the opposite side-face of the separator/electrolyte by the resistive thermal evaporation technique, according to what was described in example 3. Intermediate layers of vanadium and tungsten oxides are deposited between the separator/electrolyte and the metal layer using the resistive thermal evaporation technique - multilayered electrodes.

### Example 5 - characterization of the device discharge

FIG. 4a shows the circuit used for studying the discharge of the device (4). The device's negative terminal (anode) was connected to a fixed resistance (5) of known value. The cathode was grounded, wherein the load (5) is connected to the electrometer's inverting input (6). The non-inverting input was grounded. This configuration allows monitoring the current i in the circuit, even if it is low (in the order of 10⁻¹² A). A computer (7) connected to a data acquisition board records the experimental assay, thereby allowing to monitor the circuit current variation as a function of the discharge time, and also the potential difference across the terminals of the battery. The capacity (stored energy) of the electrochemical device can be computed by multiplying the current by the time extent of the assay.

FIG. 5a represents the behaviour of a device employing a cellulose nanofibres membrane with Au and Al electrodes, intended for biotechnological applications. For conducting the assay a fixed resistance of 12C Ω was used and 0.1 mL of a saline aqueous solution (NaCl 0.9% (w/w) ) were introduced in the beginning of the assay. This example shows that there is energy generation as long as there is fuel in the membrane. The saline solution used is intended for simulating perspiration, thereby demonstrating the device applicability to the recovery of biofluids as electrolytic solutions, wherein the device is in sustained (or even permanent) contact with the biofluid.

Another experimental result concerning a device with a paper membrane and Al and GZO electrodes is presented in FIG. 5b. In this example a fixed resistance (5) of 10 MΩ was used, and it can be seen that the battery is initially discharged but then stabilises at 0.5 V during the 12 hours of the assay. From the experimental results, it can be inferred that the battery should take longer than 115 h to discharge up to a voltage of 0.4 V. After the discharge, the device recovers to the initial voltage.

### Example 6 -Electrochemical characterization of the devices

Cyclic voltammetry is an electrochemical technique that allows detecting electrochemical reactions as well as evaluating the electron transfer kinetics of the redox processed.

The electric current intensity I corresponds to the number of electrons that cross a certain section of a circuit by time unit, which means, the moving charges velocity. Since each accepted or given electron represents part of a redox reaction occurring on the electrode/polymer interface, the electric current magnitude provides information about the amount of material that is consumed or produced on the electrode surface or inside the membrane.

This study is conducted using a potentiostat (Reference 600 Potentiostat - Gamry Instruments) that controls the current flowing inside the cell between the working electrode and the auxiliary electrode, adjusting it in order to maintain the required potential difference between the working electrode and the reference electrode.

In this example a nano/micofibres membrane (cellulose acetate) was tested between two gold electrodes in an electrochemical cell, to which 0.1 mI of a 0.9% (w/w) NaCl aqueous solution were added - see FIG. 6a. The device was subjected to 15 consecutive cycles in order to qualitatively assess its reversibility. It can be seen that the electrochemical behaviour of the device was preserved. The same procedure was applied to a common white paper membrane, with a resulting behaviour similar to the one of the cellulosic nanofibres matrix during the 5 cycles that were run (FIG. 6b).

### Example 7 - Power supplied, by the devices

For a device made of electrospun cellulose-based membrane with - cm² in area and 0.1 mm in thickness wherein 0.1 mL of a 0.9% (w/w) NaCl aqueous solution was introduced, the power value is 7.35 µW when the membrane is placed between Two gold electrodes. This value is merely illustrative, as it depends on the amount and concentration of the solution introduced, and on the area and thickness of the membrane. Different electrolytic solutions can be used according to the intended application.

### Example 8

The device produced with a membrane of tracing-paper with 70 µm in thickness and 1 cm² in area, designed according to what was presented in example 4. Thus, it was used an 200nm thick Al anode and a cathode formed by a multilayer of V₂O₅ and WO₃ films, each with 200 nm in thickness, and TCO as a current collector. This device presents a power of the order of 5 µW for a voltage of 0.5 V and a current of 10 µ° A. These values were determined from the device IV characteristics using an electrometer.

### Example 9

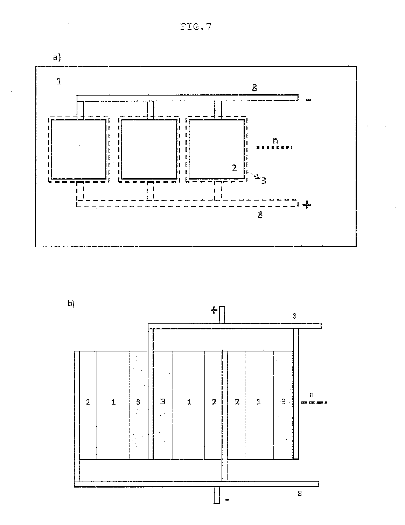

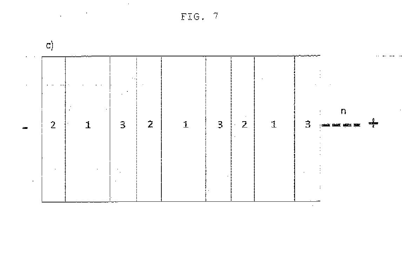

The parallel or series connection of several devices allows the optimization of the current or voltage, respectively (see FIG. 7 a), b), and c)). In a parallel connection the current is proportional to the area of the electrodes (or to the sum of the currents supplied by each element of the device), as schematically shown in FIG. 7 a) and b). In a series connection, the potential difference of the device ideally equals the sum of the potential differences of each element that constitutes the device (*V_{device}* = *n x Vₑₗₑₘₑₙₜ,* wherein n is a finite number of elements), as shown in FIG. 7 c).

An example of the series connection of the devices is presented in the following table. These devices present copper and aluminium thin films as electrodes and a recycled paper membrane. The surface area is 1 cm³. The devices A, B, C, and D exhibit, in an isolated form, an open circuit voltage of 0.57 V, 0.55 V, 0.51 V, and 0.55 V, respectively.

In this example, the interface losses that occur between the different devices are exclusively due to imperfections in the physical connection that result from merely overlapping the same. Such imperfections can be easily overcome by assuring a good contact between the elements, for example, by compression, this not being limitative of the scope of the present invention.

| Devices connected in series | Open circuit voltage, Voc (V) |
|---|---|
| A | 0.57 |
| A + B | 0.98 |
| A + B + C | 1.40 |
| A + B + C + D | 1.88 |

### Example 10 - Application of a device to a microcircuit

This example allows outlining a possible application of paper membrane devices (paper battery) to microcircuits. A possible power supply of a paper transistor [2,3] is shown in FIG. 8, wherein the positive terminal of the battery is connected to the gate and the negative terminal is connected to the semiconductor, in order to open tne channel region between the source and the drain. That connection can be inverted regarding the connection of the battery terminals to the gate electrode and semiconductor terminal, respectively, according to the transistor's type. One of the advantages of using paper as the physical support is the easy direct integration into this type of microcircuits.

### Example 11 - Biomedical application of the devices with a nano/microfibres membrane

The devices produced with membranes made of nano/microfibres of biocompatible polymers/biomaterials, like the ones referred to in this invention, can be used in biomedical implantable devices as electrical power supply for low power electronic microdevices. Some examples can be mentioned, such as powering low power pacemakers, imaging capsules, adhesive-type devices for the recovery of bodily fluids and respective conversion into electrical power, among others.

One application of a device over the skin was simulated. The cellulose-derived separator/electrolyte was produced by the electrospinning technique, exhibiting a thickness of about 25 µm. Gold and aluminium were used as electrodes, making use of perspiration as electrolytic solution. With this device of approximately 1 cm² in area and just a few drops of perspiration, a voltage of 0.58 V was achieved. This value remains constant as long as perspiration is available.

### Example 12 - Demonstration of device's flexibility

The designed devices exhibit identical performance in different geometrical shapes (FIG. 9). The membrane structure and the fact that only a single layer of separator/ electrolyte is required (although more can be used) ensure high flexibility to the matrix. A good adhesion of the thin layers onto the separator/electrolyte ensures good electrical connectivity even under extreme geometrical conditions, imparting a large versatility to the devices. As a non limitation example, a device produced according to example 4 presents an open circuit voltage of C.93 V independently of the geometry exhibited in the three cases of FIG.9.

### Example 13 - Electrode thickness

The devices of this example were designed in marketed tracing-paper. The table lists the voltage values obtained with different electrodes and different thicknesses. The characteristics of the different devices indicate a small influence of electrode thickness on the electrical properties. In fact, it is only necessary to ensure a sufficient thickness that effectively covers the paper with low resistivity and continuous films (without isolated areas). On the other hand, the influence of the electrode's type is much more significant

| Anode/cathode materials | Electrode thickness (Å) | Open Circuit Voltage (V) |
|---|---|---|
| Al/Cu | 1500/1500 | 0.61 |
| Al/Cu | 3000/3000 | 0.60 |
| Al/Cu | 6000/3000 | 0.60 |
| Al/WO₃-Cu | 1500/4000 | 0.69 |
| Al-LiALF₄/WO₃-Cu | 1500/2000 | 0.71 |
| Sn/Cu | 1000/2000 | 0.50 |
| Al/Ag | 1000/2000 | 0.25 |

### Example 14 - Study of the influence of the cellulose nanofibres membrane thickness

Example 14 shows the influence of the membrane thickness on the current density measured when a positive voltage of 0.2 V is applied to the membrane embedded with 0.1 mL of 0.9% (w/w) NaCl aqueous solution and placed between two gold electrodes.

| Membrane thickness (µm) | Current density (mA/cm²) |
|---|---|
| 30 | 0.025 |
| 50 | 0.075 |
| 80 | 0.125 |
| 130 | 0.200 |

### Example 15 - Study of the influence of the electrolytic solution on the electric characteristics of the cellulosic electrospun membrane

Example 15 demonstrates the influence of different electrolytic solutions on the short-circuit current density measured when the membrane is embedded with 0.1 mL of the solution and is placed between two gold electrodes.

| Electrolytic solution | Short-circuit current density (µA/cm²) |
|---|---|
| ----- | 0.014 |
| NaCl (0.9% w/w in deionised water) | 18 |
| Ethanol | 0.170 |
| Glucose | 5 |
| Deionised water | 0.835 |

### References

[1] Linden D., Reddy T., Handbook of Batteries, McGraw-Hill Handbooks, 3rd Edition, 2002;
[2] Fortunato E. et al., IEEE Electron Device Letters, Vol. 29 n°9 (2008) 988-990;
[3] Martins R. et al., Applied Physics Letter, 93 (2008) 203501;
[4] Zhang, WO 2008/096033 A1 (2008);
[5] Zhang et al., US 2009/0081544 A1 (2009);
[6] Kucherovsky et al., US 6,379,835 B1 (2002);
[7] Lee K., Journal of Micromechanics and Microengineering, 16 (2006) 2312-1217;
[8] Pushparaj V. et al., PNAS, Vol. 104 n° 34 (2007) 13574-13577;
[9] Halme et al., WO 2007/147942 A1 (2007);
[10] Li C., Fu Z., Electrochimica Acta, 53 (2008) 4293-4301;
[11] Oukassi S., Gagnard X., et al. DTIP of MEMS & MOEMS, (2006) 26-28;
[12] Hu R. et al., Electrochimica Acta, 53 (2008) 3377-3385;
[13] Arie A. et al., Materials Chemistry and Physics, 113-1 (2009) 249-254;
[14] Kerzenmacher et al., Journal of Power Sources, 182 (2008), 1-17;
[15] Ramakrishna *et al*., 9 (2006), 3, 40-50;
[16] Huang et al., Composites Science and Technology, 63 (2003), 2223-2253;
[17] Shin et al., US 2007/0042262 A1 (2007);
[18] Yun et al., US 2009/0026662 A1 (2009);

## Claims

1. Energy storage and/or generation device comprising a membrane (1) formed by a dry fibre matrix acting as separator, dry electrolyte and physical support/substrate for the electrodes and the device, an anode (2) deposited as a thin film onto one side-face of the fibre matrix, and a cathode (3) deposited as a thin film onto the other side-face of the fibre matrix, wherein:
a) the dry fibre matrix is obtained by previously incorporating ions in its structure during the fibre matrix manufacture, or;
b) the dry fibre matrix is obtained by previously incorporating an electrolytic solution followed by evaporating said solution.

2. The energy storage and/or generation device according tc claim 1, **characterized in that** the membrane (1) comprising micro- or nanofibres is a porous membrane.

3. The energy storage and/or generation device according to claims 1 to 2, **characterized in that** the fibres that constitute the matrix are:
- of natural origin, such as silk, cotton, or wool fibres; and/or
- of synthetic origin, such as different types of paper, tracing-paper, paperboard, or other cellulose or chitosan-derived polymeric materials.

4. The energy storage and/or generation device according to claim 3, **characterized in that** the synthetic polymers comprise:
- cellulose derivatives, such as hydroxypropylcellulose (HPC), propanoate of HPC, butyrate of HPC, isobutyrate of HPC, pentanoate of HPC, isopentanoate of HPC, t-pentanoate of HPC, hexanoate of HPC, t-hexanoate of HPC, heptanoate of HPC, benzoate of HPC, acetoxypropylcellulose, propionylpropylcellulose, cellulose acetate, methylcellulose, or carboxymethylcellulose; or
- based on chitosan or its water-soluble derivatives, such as hydroxypropylchitosan and carboxymethylchitosan.

5. The energy storage and/or generation device according to claims 1 to 4, **characterized in that** the fibres can be ion-additivated or non-additivated fibres.

6. The energy storage and/or generation device according to claims 1 to 5, **characterized in that** the fibres are obtainable by means of electrospinning technique and have a diameter between 50 nm and 2 µm.

7. The energy storage and/or generation device according to claims 3 to 6, **characterized in that** the membrane (1) comprises a plurality of overlapped layers of the same or different materials as defined in claims 3 to 6.

8. The energy storage and/or generation device according to claims 1 to 7, **characterized in that** the electrodes (2, 3) are comprised by a mono- or multilayer of thin films of the following materials, in different combinations:
- metals, such as Au, Ti, Pt, Ag, Cu, Al, Ni, Ta, Co, Zn, Sn, W, Fe, Cr, Li, Fe, Mn, Mo, Mg, or V;
- metal oxides and theirs binary alloys, such as VₓO_{y}, WOₓ, TaO, SiOₓ, TiOₓ, CoOₓ, CuOₓ, FeₓD_{y}, SnₓO_{y};
- ternary alloys of the type TiₓSi_{y}O₂, WₓTaO₂, WₓV_{y}O₂, wherein x,y,z corresponds to the number of atoms in the alloy;
- covalent semiconductors and their alloys, such as Si, C, or SiC;
- transparent and conductive oxides (TCOs), such as GZO (ZnO:Ga), IZO (ZnO:In), and AZO (ZnO:Al).

9. The energy storage and/or generation device according to claim 8, **characterized in that** the thin films are deposited by means of physical, physical-chemical, or chemical deposition techniques, such as Resistive Thermal Evaporation, Sputtering, Electron Gun, Sol-Gel, Spin Coating, Spray Pyrolysis, Chemical Vapour Decomposition, Ink-Jet Printing and Screen Printing, Spray Pulverization.

10. The energy storage and/or generation device according to any previous claim, **characterized in that** one or more ion donor layers, such as but not exclusively limited to lithium, LiAlF₄, LiClF₄, LiOH, LiPO₄, sodium, or potassium, are deposited between the membrane (1) and the electrode (2, 3).

11. The energy storage and/or generation device according to claim 6, **characterized in that** it is activated by the introduction of electrolytic solutions in case the fibres are non-additivated ones, depending on the application:
- in biomedical applications biocompatible fluids or biofluids are used, such as blood and perspiration;
- in electronic applications ionic solutions (solutions containing ions of Li, Na, K, Zn, among others), water or alcohols are used.

12. Use of devices according to claims 1 to 11, **characterized in that** they are applied as single devices or are connected in series or in parallel for flexible electronic applications.

13. Process for the manufacture of the energy storage and/or generation devices according to claims 1 to 11, **characterized in that** it comprises the following steps:
- depositing one or more thin films of electrode (2) materials onto one side-face of a membrane (1);
- depositing one or more thin films of electrode (3) materials onto the opposite side-face of the membrane (1);
wherein the membrane (1) comprises:
- a dry fibre matrix obtained by previously incorporating ions in its structure during the fibre matrix manufacture, or;
- a dry fibre matrix obtained by previously incorporating an electrolytic solution followed by evaporating said solution.

14. The process for the manufacture of the energy storage and/or generation devices according to claim 13, **characterized in that** the films are deposited by means of physical, physical-chemical, or chemical deposition techniques, such as Resistive Thermal Evaporation, Sputtering, Electron Gun, Sol-Gel, Spin Coating, Spray Pyrolysis, Chemical Vapour Decomposition, Ink-Jet Printing and Screen Printing, Spray Pulverization.

15. The process for the manufacture of the energy storage and/or generation devices according to claims 13 to 14, **characterized in that** the membrane (1) comprising by porous nanofibres is prepared by means of electrospinning technique using the following operating parameters: applied voltage, 5 - 30 kV; distance between the syringe and the collector, 5 - 25 cm; and solution injection flow, 0.1 - 1.5 mL/h.
